# EUROPEAN PATENT SPECIFICATION

(11) **EP 2 871 560 B1**
(45) Date of publication and mention of the grant of the patent: **22.09.2021**
(21) Application number: 13816952.9
(22) Date of filing: 08.07.2013
(51) Int. Cl.: G06F 3/0481

(54) **IMAGE PROCESSING METHOD AND APPARATUS**
BILDVERARBEITUNGSVERFAHREN UND VORRICHTUNG
PROCÉDÉ ET APPAREIL DE TRAITEMENT D'IMAGE

(30) Priority: 12.07.2012 CN 201210242268
(43) Date of publication of application: 13.05.2015
(73) Proprietor: Xiaomi Inc., Beijing 100085 (CN)
(72) Inventor: XU, Fei, Beijing 100085 (CN); LI, Weixing, Beijing 100085 (CN); WANG, Yahui, Beijing 100085 (CN)
(74) Representative: Millburn, Julie Elizabeth
(86) International application number: PCT/CN2013/078983
(87) International publication number: WO 2014/008841

(56) References cited:
- CN-A- 101 706 724
- CN-A- 101 795 322
- CN-A- 102 077 159
- CN-A- 102 800 045
- US-A1- 2007 083 827
- US-A1- 2009 007 012

## Description

### TECHNICAL FIELD

The present disclosure relates to the field of computer and image processing technology, and more particularly, to a method and a device for image processing.

### BACKGROUND

With the development of communication technology and value-added service, applications on a mobile terminal are getting richer and richer, and user experience is getting better and better. A "preview" is a very important sub-application, and is used in many application programs. With the function of the "preview", a user can see the effect of implementing the application before a final application is determined.

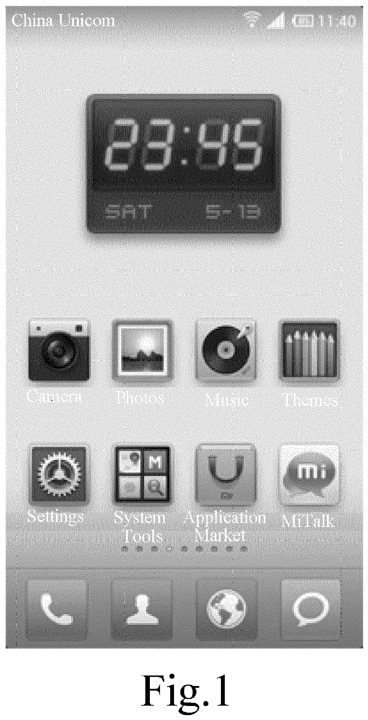

Currently, the "preview" sub-application is implemented by "overlaying" a selected picture of a target application on a simulated environment, so as to provide a simulation style "similar to" a real application scenario. That is, preset a background picture, and then "overlay" the picture of the target application on the background picture, as shown in Fig. 1, taking a desktop clock application as an example.
Although the preset background picture comprises icons of other applications, these icons are just used to simulate a real environment, and are not icons of the real applications set by the user. Therefore, there is a difference between the background picture is located and the application scenario where the picture of the target application is actually located, causing that the real application scenario does not be previewed and the display effect of the preview is affected. And, the significance of the icons of other applications in the background picture is higher than that of the picture of the target application, or the significance of both of them is basically equal, which affects the preview effect of the picture of the target application, and results in difficulty for the user to find the picture of the target application.

US2009/0007012A1 provides a region menu to easily access menu items. The region menu includes a number of regions with associated menus that are located close to an initial mouse position from where the region menu is evoked.

US2007/083827A1 provides a device for and a method of dynamically refreshing presentation of icons for objects processed on an electronic device are provided. The method comprises: establishing a triggering event to initiate refreshment of a layout of the icons displayed on a display in the device; upon detection of the triggering event, creating a ranking of the objects processed by the device utilizing activity logs providing their recent levels of activity; identifying a most frequently processed object from the ranking; and automatically refreshing the layout of icons to highlight an icon associated with the most frequently processed object.

### SUMMARY

The embodiments of the present disclosure provide a method and a device for image processing, which are used to improve the display effect of the image.

A method for image processing carried out by a mobile device comprises the following steps of: determining a picture of a target application and an actual environment where the target application should be according to a triggering of a preview event; obtaining a background picture according to the actual environment where the target application should be; performing image processing on at least one of: the picture of the target application and the background picture, wherein the step of performing image processing comprises modifying a value of at least one factor of grayscale, luminance, chrominance and transparency of the at least one picture so that the value of the picture of the target application in at least one of luminance and chrominance is higher than that of the background picture and/or a value of the picture of the target application in at least one of grayscale and transparency is lower than that of the background picture; and, if both the picture of the target application and the background picture are processed in the image processing step, outputting a combination of both processed pictures in a preview environment, or else, if only one of the picture of the target application and the background picture is processed in the image processing step, outputting a combination of the processed picture and the unprocessed picture in the preview environment. The present embodiment makes the picture of the target application more eye-catching by modifying the picture of the target application and/or the background picture, thus improving the display effect of the preview image, so that the user can see the preview effect more clearly.

The step of the performing the image processing on at least one picture of the picture of the target application and the background picture comprises: modifying a value of at least one factor of grayscale, luminance, chrominance and transparency of the at least one picture, so that the visual prominence of the picture of the target application is higher than that of the background picture. The present embodiment provides various picture modification manners, which are applicable to various picture formats, such as YUV (luminance and chrominance components), RGB (red, green and blue), etc.; the modification manners are flexible and diverse, applicable to various scenarios.

Preferably, the step of the modifying the value of at least one factor of the grayscale, the luminance, the chrominance and the transparency of the at least one picture comprises: reducing the transparency of the background picture so as to at least make the reduced transparency of the background picture lower than the transparency of the picture of the target application. Modifying the transparency is a manner with simple operation and better preview effect.

For example, upon image processing the background picture, the step of image processing comprises: determining whether a value of at least one factor of the grayscale and the transparency of the background picture is less than a sum value of a value of a corresponding factor of the picture of the target application and a preset amplitude value; if it is, increasing the value of the at least one factor of the grayscale and the transparency of the background picture to be the sum value of the value of the corresponding factor of the picture of the target application and the preset amplitude value or above the sum value; or determining whether a value of at least one factor of the luminance and the chrominance of the background picture is larger than a difference value between the value of the corresponding factor of the picture of the target application and the preset amplitude value; if it is, reducing the value of at least one factor of the luminance and the chrominance of the background picture to the difference value between the value of the corresponding factor of the picture of the target application and the preset amplitude value or below the difference value.

For example, the background picture is a picture of the actual environment in which the target application is not applied; and the step of outputting comprises: outputting an overlaid picture in the preview environment after overlaying the picture of the target application on the background picture. Especially in the scenario that only performing the image processing on the background image, the present embodiment is used to complete two main steps of modifying the background picture and overlaying the picture of the target application on the background picture in the process for image processing, thus simplifying the operational processes.

Or, for example, the background picture is a picture obtained by clipping a region where the picture of the target application is located from a picture of the actual environment in which the target application is applied; and the step of the outputting the combination of the picture of the target application and the background picture in the preview environment comprises: outputting a filled picture in the preview environment after filling the picture of the target application into a clip region of the background picture. Especially in the scenario that only performing the image processing on the background image, although the present embodiment adds the clipping step, the image modification area is reduced while modifying the background picture.

A device for image processing on a mobile device comprises:
an environmental simulation module configured to determine a picture of a target application and an actual environment where the target application should be according to a triggering of a preview event;
a background picture generation module configured to obtain a background picture according to the actual environment where the target application should be;
a picture processing module configured to perform an image processing on at least one of: the picture of the target application and the background picture, the picture processing module configured to modify a value of at least one factor of grayscale, luminance, chrominance and transparency of the at least one picture so that the value of the picture of the target application in at least one of luminance and chrominance is higher than that of the background picture and/or a value of the picture of the target application in at least one of grayscale and transparency is lower than that of the background; and
a preview output module configured to output a combination of both processed pictures in a preview environment if both the picture of the target application and the background picture are processed by the picture processing module (1103) and configured to output a combination of the processed picture and the unprocessed picture in the preview environment if only one of the picture of the target application and the background picture is processed in the image processing step.

The picture processing module modifies a value of at least one factor of grayscale, luminance, chrominance and transparency of the at least one picture, so that the visual prominence of the picture of the target application in at least one aspect of the grayscale, the luminance, the chrominance and the transparency is higher than that of the background picture.

The picture processing module may reduce the transparency of the background picture so as to at least make the reduced transparency of the background picture lower than the transparency of the picture of the target application.

The picture processing module may further be configured to, upon image processing the background picture, determine whether a value of at least one factor of the grayscale and the transparency of the background picture is less than a sum value of a value of a corresponding factor of the picture of the target application and a preset amplitude value; if it is, increasing the value of the at least one factor of the grayscale and the transparency of the background picture to be the sum value of the value of the corresponding factor of the picture of the target application and the preset amplitude value or above the sum value; or, determines whether a value of at least one factor of the luminance and the chrominance of the background picture is larger than a difference value between the value of the corresponding factor of the picture of the target application and the preset amplitude value; if it is, reducing the value of at least one factor of the luminance and the chrominance of the background picture to be the difference value between the value of the corresponding factor of the picture of the target application and the preset amplitude value or below the difference value.

The background picture may be a picture of the actual environment in which the target application is not applied; and

the preview output module outputs an overlaid picture in the preview environment after overlaying the picture of the target application on the background picture.

The background picture may be a picture obtained by clipping the region where the picture of the target application is located from the picture of the actual environment in which the target application is applied; and
the preview output module outputs a filled picture in the preview environment after filling the picture of the target application into a clip region of the background picture.

Other features and advantages of the present disclosure will be illustrated in the description hereinafter, and may become in part apparent from the description, or may be learned through the implementation of the present disclosure. The objects and other advantages of the present disclosure may be achieved and obtained by specific structures listed in the specification, the claims, and the appending drawings.

Further detailed descriptions of the present disclosure will be illustrated with reference to the appending drawings and the embodiments.

### BRIEF DESCRIPTION OF THE DRAWINGS

The accompanying drawings are used to provide further illustration of the present disclosure, and constitute a part of the description, and together with the embodiments of the present disclosure, serve to explain the present disclosure, rather than limiting the present disclosure. In the drawings:
Fig. 1 is a schematic view showing a preview mode in the prior art;
Fig. 2 is a flowchart showing a main method diagram for image processing according to an embodiment of the present disclosure;
Fig. 3 is a flowchart showing a method for image processing while the background picture is a picture of the actual environment in which the target application is not applied according to an embodiment of the present disclosure;
Fig. 4 is a schematic view showing a desktop clock alternative style according to an embodiment of the present disclosure;
Fig. 5 is a schematic view showing a selected clock style according to an embodiment of the present disclosure;
Fig. 6 is a schematic view showing the first page of the homepage which a desktop time tool picture is not included according to an embodiment of the present disclosure;
Fig. 7 is a schematic view when the preview is performing according to an embodiment of the present disclosure;
Fig. 8 is a schematic view showing an actual application according to an embodiment of the present disclosure;
Fig. 9 is a flowchart showing a method for image processing when the background picture is a picture obtained by clipping a region where the picture of the target application is located from the picture of the actual environment in which the target application is applied according to an embodiment of the present disclosure;
Fig. 10 is a schematic view showing the clipped first page of the homepage according to an embodiment of the present disclosure;
Fig. 11 is a structural diagram of a device according to an embodiment of the present disclosure; and
Fig. 12 is a structural diagram of a mobile phone according to an embodiment of the present disclosure.

### DETAILED DESCRIPTION

Hereinafter, preferred embodiments of the disclosure will be described in reference to the accompanying drawings. It should be understood that the preferred embodiments described herein are used merely to illustrate and explain rather than to limit the embodiments of the disclosure.

The present embodiment makes the picture of the target application more eye-catching by modifying the picture of the target application and/or the background picture, thus improving the display effect of the preview image, so that the user can see the preview effect more clearly.

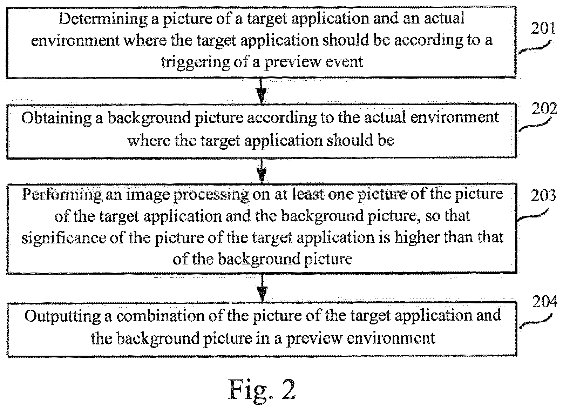

Referring to Fig. 2, the main method flow diagram for image processing according to the present embodiment is as follows:
In Step 201: it is determined a picture of a target application and an actual environment where the target application should be according to a triggering of a preview event.
In Step 202: it is obtained a background picture according to the actual environment where the target application should be.
In Step 203: it is performed an image processing on at least one picture of the picture of the target application and the background picture, so that significance of the picture of the target application is higher than that of the background picture.
In Step 204: it is output a combination of the picture of the target application and the background picture in a preview environment.

In the present embodiment, the picture of the target application or the background picture or both of them can be modified, as long as the significance of the picture of the target application is higher than that of the background picture. The significance is reflected in at least one factor of the grayscale, the luminance, the chrominance and the transparency. That is, the value of the picture of the target application in at least one aspect of the luminance and the chrominance may be higher than that of the background picture, and the value of the picture of the target application in at least one aspect of the grayscale and the transparency may be lower than that of the background picture. Which factor or factors needs to be specifically modified in value are dependent on the format of the picture and the value of the specific factor. A preferred solution is to reduce the transparency of the background picture, thus ensuring both the authenticity of the picture of the target application, and highlighting the picture of the target application, so that the user can really and visually see the display effect of the picture of the target application while performing the preview.

Also, it is prejudged whether the value of at least one factor of the grayscale, the luminance, the chrominance and the transparency of the background picture is larger than a difference value between the value of the corresponding factor of the picture of the target application and a preset amplitude value. If it is, the value of at least one factor of the grayscale, the luminance, the chrominance and the transparency of the background picture is reduced to be the difference value between the value of the corresponding factor of the picture of the target application and the preset amplitude value or below the difference value. Otherwise, the modification is not performed. The value range of the preset amplitude value on the grayscale, the luminance, the chrominance and the transparency may be 10%∼20% of that of the picture of the target application in aspect of the grayscale, the luminance, the chrominance and the transparency.

The background picture in the present embodiment is a picture of the actual environment in which the target application is not applied; at this time, the step of the outputting the combination of the picture of the target application and the background picture in the preview environment comprises: outputting an overlaid picture in the preview environment after overlaying the picture of the target application on the background picture.

Or, the background picture is a picture obtained by clipping the region where the picture of the target application is located from the picture of the actual environment in which the target application is applied; at this time, the step of the outputting the combination of the picture of the target application and the background picture in the preview environment comprises: outputting a filled picture in the preview environment after filling the picture of the target application into a clip region of the background picture.

The embodiments described above illustrate various possible implementation methods, and the detailed descriptions of the implementation process will be illustrated with reference to two typical embodiments.

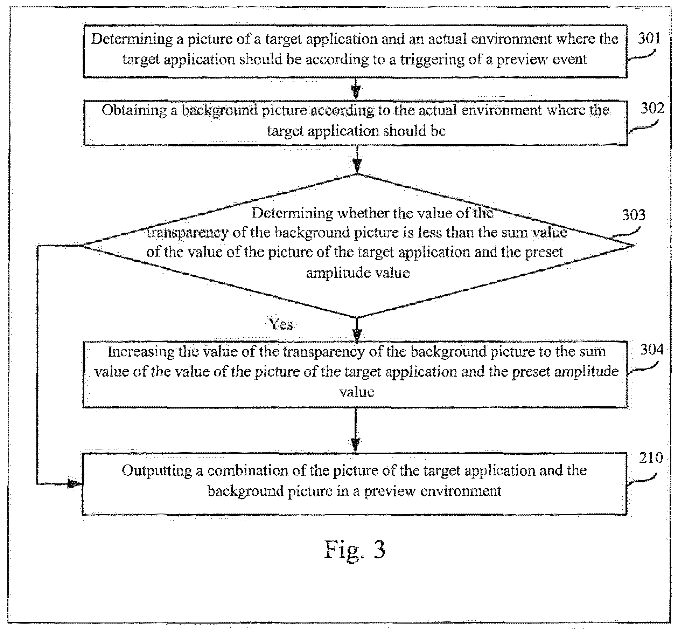

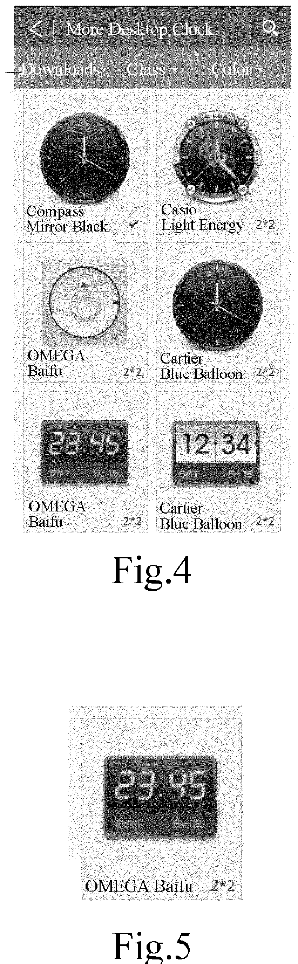

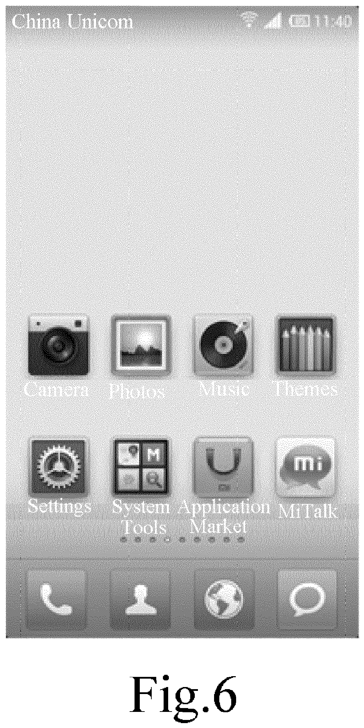

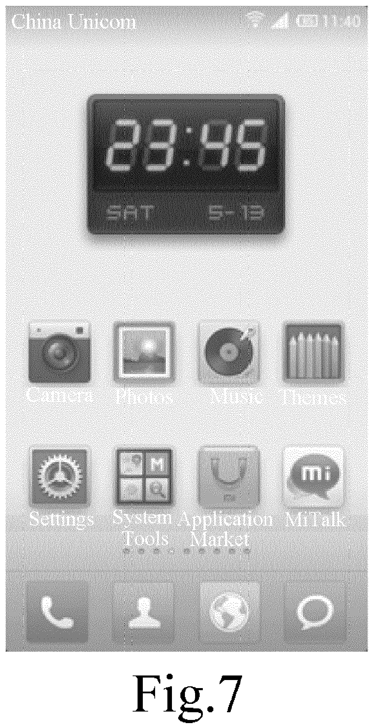

Fig. 3 shows a method for image processing while the background picture is a picture of the actual environment in which the target application is not applied in an embodiment.:
In Step 301: It is determined a picture of a target application and an actual environment where the target application should be according to a triggering of a preview event. The position where the picture of the target application needs to be confirmed, for example, at the first page of the homepage or the second page of the homepage or the homepage of some other applications, etc.. Other icons or pictures under the same page also need to be confirmed. Taking the desktop time tool as an example, the user selects a kind of clock style from the candidate styles shown in Fig. 4, and the selected clock style is shown in Fig. 5.
In Step 302: it is obtained a background picture according to the actual environment where the target application should be. The background picture is a picture of the actual environment in which the target application is not applied, and the background picture comprises icons or pictures of other kind of applications, taking the desktop time tool on the first page of the homepage as an example, as shown in Fig. 6.
In Step 303: it is determined whether the value of the transparency of the background picture is less than the sum value of the value of the picture of the target application and a preset amplitude value; If it is, proceed to step 304, otherwise proceed to step 305.
In Step 304: it is increased the value of the transparency of the background picture to be the sum value of the value of the picture of the target application and the preset amplitude value.
In Step 305: it is outputted an overlaid picture in the preview environment after overlaying the picture of the target application on the background picture. Taking the desktop time tool as an example, the processed picture is shown in Fig. 7, in which the processed background picture is displayed by means of the grayscale while the desktop time tool is displayed by means of the actual value. The processed picture can be displayed either to full screen or not.

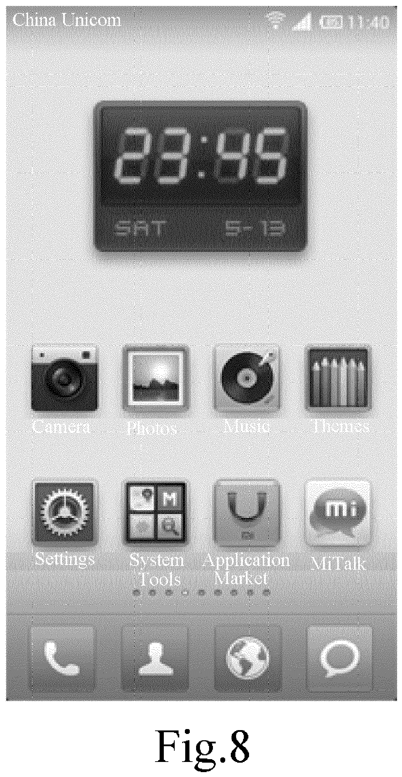

The modification to the background picture according to the present embodiment is aimed at modifying pixel values of the background picture while it is displayed, rather than the background picture itself. After it is determined to use the target application after previewing, the background picture is displayed with its actual value. Taking the desktop time tool as an example, the background picture after the target application is determined to be used is shown in Fig. 8. At this time, the background picture in Fig. 8 is not displayed with the grayscale in Fig. 7, but with the actual value of the background picture.

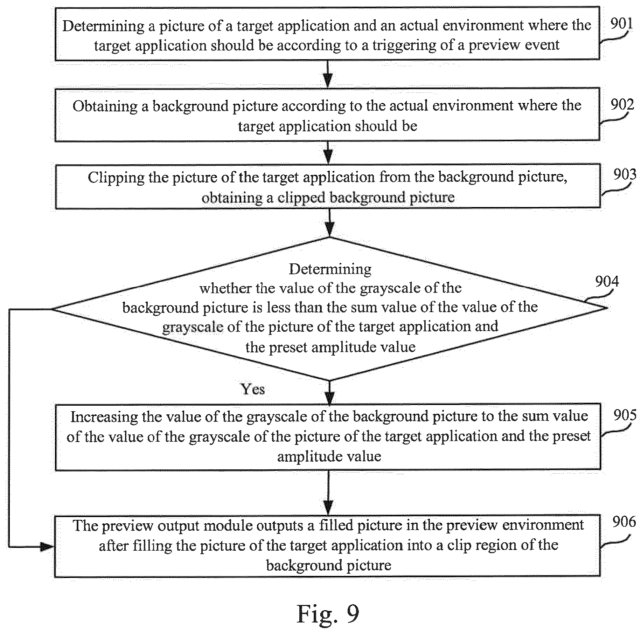

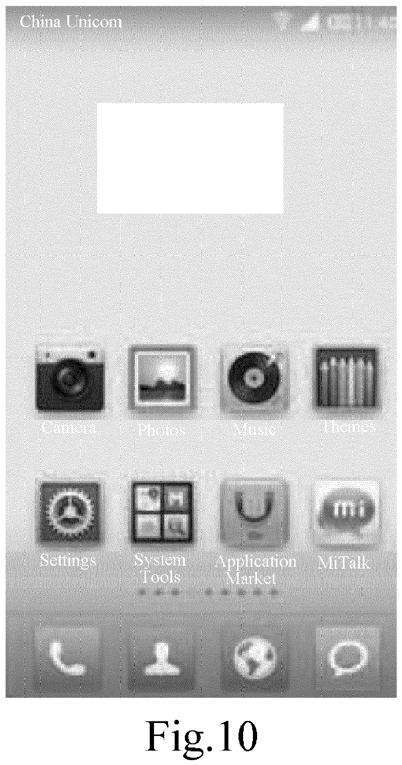

Referring to Fig. 9, the method for image processing when the background picture is a picture obtained by clipping the region where the picture of the target application is located from the picture of the actual environment in which the target application is applied is:
In Step 901: it is determined a picture of a target application and an actual environment where the target application should be according to a triggering of a preview event.
In Step 902: it is obtained a background picture according to the actual environment where the target application should be. The background picture comprises the picture of the target application.
In Step 903: it is clipped the picture of the target application from the background picture, and obtained a clipped background picture, taking the desktop time tool on the first page of the homepage as an example, as shown in Fig. 10.
In Step 904: it is determined whether the value of the grayscale of the background picture is less than the sum value of the value of the grayscale of the picture of the target application and a preset amplitude value; if it is, proceed to step 905, otherwise proceed to step 906.
In Step 905: it is increased the value of the grayscale of the background picture to be the sum value of the value of the grayscale of the picture of the target application and the preset amplitude value.
In Step 906: a preview output module outputs a filled picture in the preview environment after filling the picture of the target application into a clip region of the background picture.

The modification to the background picture according to the present embodiment is aimed at modifying pixel values of the background picture while it is displayed, rather than the background picture itself. After it is determined to use the target application after previewing, the background picture is displayed with its actual value.

The implementation process for image processing should be understood through the above descriptions. The process may be implemented by a device, and the internal structure and the function of the device will be illustrated.

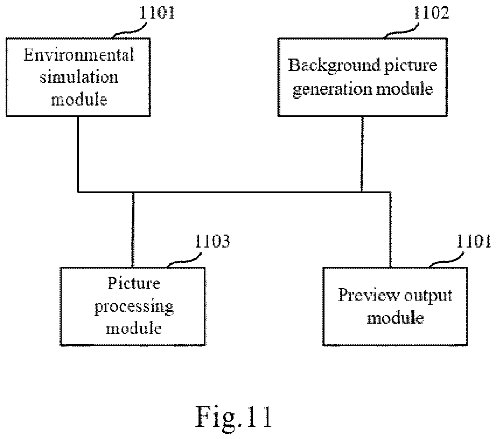

Referring to Fig. 11, the device in the present embodiment comprises: an environmental simulation module 1101, a background picture generation module 1102, a picture processing module 1103 and a preview output module 1104. The device can be specific embodied in a form of a mobile phone or a computer, etc..

The environmental simulation module 1101 is configured to determine a picture of a target application and an actual environment where the target application should be according to a triggering of a preview event.

The background picture generation module 1102 is configured to obtain a background picture according to the actual environment where the target application should be.

The picture processing module 1103 is configured to perform an image processing on at least one picture of the picture of the target application and the background picture, so that significance of the picture of the target application is higher than that of the background picture. Specifically, the picture processing module 1103 modifies the value of at least one factor of, the luminance, the chrominance and the transparency of the at least one picture, so that the value of the picture of the target application in at least one aspect of the grayscale, the luminance, the chrominance and the transparency is higher than that of the background picture. Preferably, the picture processing module 1103 reduces the transparency of the background picture so as to make the reduced transparency of the background picture lower than the transparency of the picture of the target application. And, the picture processing module 1103 is further configured to judge whether a value of at least one factor of the grayscale, the luminance, the chrominance and the transparency of the background picture is larger than a difference value between the value of the corresponding factor of the picture of the target application and the preset amplitude value; if it is, reduce the value of at least one factor of the grayscale, the luminance, the chrominance and the transparency of the background picture to be the difference value between the value of the corresponding factor of the picture of the target application and the preset amplitude value or below the difference value.

The preview output module 1104 is configured to output a combination of the picture of the target application and the background picture in a preview environment. Specifically, the background picture is a picture of the actual environment in which the target application is not applied. In this case, the preview output module 1104 outputs an overlaid picture in the preview environment after overlaying the picture of the target application on the background picture. Or, the background picture is a picture obtained by clipping the region where the picture of the target application is located from the picture of the actual environment in which the target application is applied. In this case, the preview output module 1104 outputs a filled picture in the preview environment after filling the picture of the target application into the clip region of the background picture.

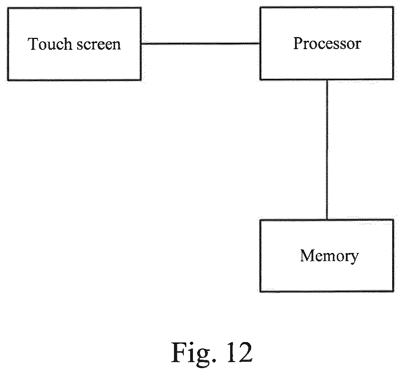

Taking the mobile phone as an example, the mobile phone comprises a touch screen, a processor and a memory, as shown in Fig. 12. The processor obtains the triggering of the preview event through the touch screen, traverses the records in the memory, determines the picture of the target application and the actual environment where the target application should be, and obtains various resources (including the icons or the pictures of other kind of applications, etc.) in the actual environment. The processor further carries out the functions of the background picture generation module 1102, the picture processing module 1103 and the preview output module 1104.

The present embodiment makes the picture of the target application more eye-catching by modifying the picture of the target application and/or the background picture, thus improving the display effect of the preview image, so that the user can see the preview effect more clearly. And, the present embodiment provides various modification manners in terms of the grayscale, the luminance, the chrominance and the transparency, etc., adptive to various picture formats, such as YUV (luminance and chrominance components), RGB (red, green and blue), etc. as well as flexible and diverse modification manners applicable to various scenarios. And the manner for processing the background picture is not single, thus simplifying the processing process and improving the processing efficiency.

Those skilled in the art should understand that the present disclosure may be implemented in a method, a system, or a computer program product. Accordingly, the present disclosure may be embodied in the form of hardware only, software only, or a combination thereof. Moreover, the present disclosure may be embodied in the form of a computer program product implemented on one or more computer-readable storage medium (including but not limited to a magnetic disk memory and an optic memory) containing computer-readable program codes.

The present disclosure is described with reference to flow charts and/or block diagrams of the method, device (system), and computer program product according to the present disclosure. It should be understood that each of the processes and/or blocks in the flow charts and/or the block diagrams, and any combination of the processes and/or blocks in the flow charts and/or the block diagrams may be embodied as computer program instructions. The computer program instructions may be provided to a processor of a general purpose computer, a dedicated computer, an embedded computer or other programmable data processing device so as to constitute a machine. Thus, a device for implementing those functions specified by one or more processes in the flow charts and/or one or more blocks in the block diagrams, may be achieved by instructions executed by the processor of the computer or the other programmable data processing device.

The computer program instructions may also be stored in a computer-readable memory which may guide a computer or other programmable data processing device to operate in a specific manner, so that the instructions stored in the computer-readable memory may be embodied into a product including an instructions device, which may implement those functions specified by one or more processes in the flow charts and/or one or more blocks in the block diagrams.

The computer program instructions may also be loaded into a computer or other programmable data processing device, so that a series of operations may be performed in the computer or the other programmable data-processing device to achieve processes implemented by the computer. Thus, the instructions executed in the computer or the other programmable data-processing device may provide steps for implementing those functions specified by one or more processes in the flow charts and/or one or more blocks in the block diagrams.

## Claims

1. A method for image processing carried out by a mobile device, the method comprising:
determining (201) a picture of a target application and an actual environment where the target application should be according to a triggering of a preview event;
obtaining (202) a background picture according to the actual environment where the target application should be;
performing (203) image processing on at least one of: the picture of the target application; and the background picture,
wherein the step of performing image processing comprises modifying a value of at least one factor of grayscale, luminance, chrominance and transparency so that the value of the picture of the target application in at least one of luminance and chrominance is higher than that of the background picture and/or a value of the picture of the target application in at least one of grayscale and transparency is lower than that of the background picture; and,
if both the picture of the target application and the background picture are processed in the image processing step, outputting (204) a combination of both processed pictures in a preview environment, or else, if only one of the picture of the target application and the background picture is processed in the image processing step, outputting (204) a combination of the processed picture and the unprocessed picture in a preview environment.

2. The method according to claim 1, wherein the step of the modifying the value of at least one factor of the grayscale, the luminance, the chrominance and the transparency of the at least one picture comprises:
reducing the transparency of the background picture so as to at least make the reduced transparency of the background picture lower than the transparency of the picture of the target application.

3. The method according to claim 1 or 2, wherein upon image processing the background picture, the step of image processing comprises:
determining (303) whether a value of at least one factor of the grayscale and the transparency of the background picture is less than a sum value of a value of a corresponding factor of the picture of the target application and a preset amplitude value;
if it is, increasing (304) the value of the at least one factor of the grayscale and the transparency of the background picture to be the sum value of the value of the corresponding factor of the picture of the target application and the preset amplitude value or above the sum value; or
determining whether a value of at least one factor of the luminance and the chrominance of the background picture is larger than a difference value between the value of the corresponding factor of the picture of the target application and the preset amplitude value;
if it is, reducing the value of at least one factor of the luminance and the chrominance of the background picture to be the difference value between the value of the corresponding factor of the picture of the target application and the preset amplitude value or below the difference value.

4. The method according to any one of claims 1 to 3, wherein the background picture is a picture of the actual environment in which the target application is not applied; and
the step of outputting (204) comprises:
outputting (210) an overlaid picture in the preview environment after overlaying the picture of the target application on the background picture.

5. The method according to any one of claims 1 to 3, wherein the background picture is a picture obtained by clipping a region where the picture of the target application is located from a picture of the actual environment in which the target application is applied;
and
the step of the outputting the combination of the picture of the target application and the background picture in the preview environment comprises:
outputting (906) a filled picture in the preview environment after filling the picture of the target application into a clip region of the background picture.

6. A device for image processing on a mobile device, comprising:
an environmental simulation module (1101) configured to determine a picture of a target application and an actual environment where the target application should be according to a triggering of a preview event;
a background picture generation module (1102) configured to obtain a background picture according to the actual environment where the target application should be;
a picture processing module (1103) configured to perform an image processing on at least one of: the picture of the target application and the background picture,
the picture processing module (1103) configured to modify a value of at least one factor of grayscale, luminance, chrominance and transparency of the at least one picture so that the value of the picture of the target application in at least one of luminance and chrominance is higher than that of the background picture and/or a value of the picture of the target application in at least one of grayscale and transparency is lower than that of the background; and
a preview output module (1104) configured to output a combination of both processed pictures in a preview environment if both the picture of the target application and the background picture are processed by the picture processing module (1103) and configured to output a combination of the processed picture and the unprocessed picture in a preview environment if only one of the picture of the target application and the background picture is processed by the picture processing module (1103).

7. The device according to claim 6, wherein the picture processing module (1103) reduces the transparency of the background picture so as to at least make the reduced transparency of the background picture lower than the transparency of the picture of the target application.

8. The device according to claim 6 or 7, wherein the picture processing module (1103) is further configured to, upon image processing the background picture, determine whether a value of at least one factor of the grayscale and the transparency of the background picture is less than a sum value of a value of a corresponding factor of the picture of the target application and a preset amplitude value; if it is, increasing the value of the at least one factor of the grayscale and the transparency of the background picture to be the sum value of the value of the corresponding factor of the picture of the target application and the preset amplitude value or above the sum value; or, determine whether a value of at least one factor of the luminance and the chrominance of the background picture is larger than a difference value between the value of the corresponding factor of the picture of the target application and the preset amplitude value; if it is, reducing the value of at least one factor of the luminance and the chrominance of the background picture to be the difference value between the value of the corresponding factor of the picture of the target application and the preset amplitude value or below the difference value.

9. The device according to any one of claims 6 to 8, wherein the background picture is a picture of the actual environment in which the target application is not applied; and
the preview output module outputs an overlaid picture in the preview environment after overlaying the picture of the target application on the background picture.

10. The device according to any one of claims 6 to 8, wherein the background picture is a picture obtained by clipping the region where the picture of the target application is located from the picture of the actual environment in which the target application is applied; and
the preview output module (1104) outputs a filled picture in the preview environment after filling the picture of the target application into a clip region of the background picture.

11. A computer program product which when executed on a processor performs the steps of any of claims 1 to 5.

## Patentansprüche

1. Verfahren zur Bildverarbeitung, ausgeführt durch ein mobiles Gerät, wobei das Verfahren Folgendes beinhaltet:
Bestimmen (201) eines Bildes einer Zielanwendung und einer tatsächlichen Umgebung, in der sich die Zielanwendung befinden sollte, gemäß einer Auslösung eines Voransichtsereignisses;
Einholen (202) eines Hintergrundbildes gemäß der tatsächlichen Umgebung, in der sich die Zielanwendung befinden sollte;
Durchführen (203) einer Bildverarbeitung an dem Bild der Zielanwendung und/oder dem Hintergrundbild,
wobei der Schritt des Durchführens einer Bildverarbeitung das Modifizieren eines Wertes von mindestens einem Faktor aus Graustufe, Luminanz, Chrominanz und Transparenz beinhaltet, so dass der Wert des Bildes der Zielanwendung in Luminanz und/oder Chrominanz höher ist als der des Hintergrundbildes, und/oder ein Wert des Bildes der Zielanwendung in Graustufe und/oder Transparenz niedriger ist als der des Hintergrundbildes; und
Ausgeben (204), wenn sowohl das Bild der Zielanwendung als auch das Hintergrundbild in dem Bildverarbeitungsschritt verarbeitet werden, einer Kombination beider verarbeiteter Bilder in einer Voransichtsumgebung, andernfalls Ausgeben (204), wenn nur eines aus Bild der Zielanwendung und Hintergrundbild in dem Bildverarbeitungsschritt verarbeitet wird, einer Kombination des verarbeiteten Bildes und des unverarbeiteten Bildes in einer Voransichtsumgebung.

2. Verfahren nach Anspruch 1, wobei der Schritt des Modifizierens des Wertes von mindestens einem Faktor aus Grauskala, Luminanz, Chrominanz und Transparenz des mindestens einen Bildes Folgendes beinhaltet:
Reduzieren der Transparenz des Hintergrundbildes, um zumindest die reduzierte Transparenz des Hintergrundbildes niedriger zu machen als die Transparenz des Bildes der Zielanwendung.

3. Verfahren nach Anspruch 1 oder 2, wobei der Bildverarbeitungsschritt nach der Bildverarbeitung des Hintergrundbildes Folgendes beinhaltet:
Feststellen (303), ob ein Wert von mindestens einem Faktor der Grauskala und der Transparenz des Hintergrundbildes kleiner ist als ein Summenwert eines Wertes eines entsprechenden Faktors des Bildes der Zielanwendung und eines voreingestellten Amplitudenwertes;
wenn ja, Erhöhen (304) des Wertes des mindestens einen Faktors der Grauskala und der Transparenz des Hintergrundbildes auf den Summenwert des Wertes des entsprechenden Faktors des Bildes der Zielanwendung und des voreingestellten Amplitudenwertes oder über den Summenwert; oder
Feststellen, ob ein Wert von mindestens einem Faktor der Luminanz und der Chrominanz des Hintergrundbildes größer ist als ein Differenzwert zwischen dem Wert des entsprechenden Faktors des Bildes der Zielanwendung und dem voreingestellten Amplitudenwert;
wenn ja, Reduzieren des Wertes von mindestens einem Faktor der Luminanz und der Chrominanz des Hintergrundbildes auf den Differenzwert zwischen dem Wert des entsprechenden Faktors des Bildes der Zielanwendung und dem voreingestellten Amplitudenwert oder unter den Differenzwert.

4. Verfahren nach einem der Ansprüche 1 bis 3, wobei das Hintergrundbild ein Bild der tatsächlichen Umgebung ist, in der die Zielanwendung nicht angewendet wird; und
der Schritt des Ausgebens (204) Folgendes beinhaltet:
Ausgeben (210) eines überlagerten Bildes in der Voransichtsumgebung nach dem Überlagern des Bildes der Zielanwendung über das Hintergrundbild.

5. Verfahren nach einem der Ansprüche 1 bis 3, wobei das Hintergrundbild ein Bild ist, das durch Ausschneiden eines Bereichs, in dem sich das Bild der Zielanwendung befindet, aus einem Bild der tatsächlichen Umgebung, in der die Zielanwendung angewendet wird, erhalten wird; und
der Schritt des Ausgebens der Kombination des Bildes der Zielanwendung und des Hintergrundbildes in der Voransichtsumgebung Folgendes beinhaltet:
Ausgeben (906) eines gefüllten Bildes in der Voransichtsumgebung nach dem Füllen eines Ausschnittbereichs des Hintergrundbildes mit dem Bild der Zielanwendung.

6. Gerät zur Bildverarbeitung auf einem mobilen Gerät, das Folgendes umfasst:
ein Umgebungssimulationsmodul (1101), konfiguriert zum Bestimmen eines Bildes einer Zielanwendung und einer tatsächlichen Umgebung, in der sich die Zielanwendung befinden sollte, gemäß einer Auslösung eines Voransichtsreignisses;
ein Hintergrundbilderzeugungsmodul (1102), konfiguriert zum Einholen eines Hintergrundbildes gemäß der tatsächlichen Umgebung, in der sich die Zielanwendung befinden sollte;
ein Bildverarbeitungsmodul (1103), konfiguriert zum Durchführen einer Bildverarbeitung am Bild der Zielanwendung und/oder am Hintergrundbild,
wobei das Bildverarbeitungsmodul (1103) zum Modifizieren eines Wertes von mindestens einem Faktor aus Graustufe, Luminanz, Chrominanz und Transparenz des mindestens einen Bildes konfiguriert ist, so dass der Wert des Bildes der Zielanwendung in Luminanz und/oder Chrominanz höher als der des Hintergrundbildes ist und/oder ein Wert des Bildes der Zielanwendung in Graustufe und/oder Transparenz niedriger als der des Hintergrundes ist; und
ein Voransichtsausgabemodul (1104), konfiguriert zum Ausgeben einer Kombination beider verarbeiteter Bilder in einer Voransichtsumgebung, wenn sowohl das Bild der Zielanwendung als auch das Hintergrundbild durch das Bildverarbeitungsmodul (1103) verarbeitet werden, und konfiguriert zum Ausgeben einer Kombination des verarbeiteten Bildes und des unverarbeiteten Bildes in einer Voransichtsumgebung, wenn nur eines von dem Bild der Zielanwendung und dem Hintergrundbild von dem Bildverarbeitungsmodul (1103) verarbeitet wird.

7. Gerät nach Anspruch 6, wobei das Bildverarbeitungsmodul (1103) die Transparenz des Hintergrundbildes reduziert, um zumindest die reduzierte Transparenz des Hintergrundbildes geringer zu machen als die Transparenz des Bildes der Zielanwendung.

8. Gerät nach Anspruch 6 oder 7, wobei das Bildverarbeitungsmodul (1103) ferner konfiguriert ist zum Feststellen, nach der Bildverarbeitung des Hintergrundbildes, ob ein Wert mindestens eines Faktors der Graustufe und der Transparenz des Hintergrundbildes kleiner ist als ein Summenwert eines Wertes eines entsprechenden Faktors des Bildes der Zielanwendung und eines voreingestellten Amplitudenwertes; wenn ja, Erhöhen des Wertes des mindestens einen Faktors der Grauskala und der Transparenz des Hintergrundbildes auf den Summenwert des Wertes des entsprechenden Faktors des Bildes der Zielanwendung und des voreingestellten Amplitudenwertes oder über den Summenwert; oder Feststellen, ob ein Wert von mindestens einem Faktor der Luminanz und der Chrominanz des Hintergrundbildes größer ist als ein Differenzwert zwischen dem Wert des entsprechenden Faktors des Bildes der Zielanwendung und dem voreingestellten Amplitudenwert; wenn ja, Reduzieren des Wertes von mindestens einem Faktor der Luminanz und der Chrominanz des Hintergrundbildes auf den Differenzwert zwischen dem Wert des entsprechenden Faktors des Bildes der Zielanwendung und dem voreingestellten Amplitudenwert oder unter den Differenzwert.

9. Gerät nach einem der Ansprüche 6 bis 8, wobei das Hintergrundbild ein Bild der tatsächlichen Umgebung ist, in der die Zielanwendung nicht angewendet wird; und
das Voransichtsausgabemodul ein überlagertes Bild in der Voransichtsumgebung nach dem Überlagern des Bildes der Zielanwendung über das Hintergrundbild ausgibt.

10. Gerät nach einem der Ansprüche 6 bis 8, wobei das Hintergrundbild ein Bild ist, das durch Ausschneiden des Bereichs, in dem sich das Bild der Zielanwendung befindet, aus dem Bild der tatsächlichen Umgebung, in der die Zielanwendung angewendet wird, erhalten wird; und
das Voransichtsausgabemodul (1104), nach dem Füllen eines Ausschnittbereichs des Hintergrundbildes mit dem Bild der Zielanwendung ein gefülltes Bild in der Voransichtsumgebung ausgibt.

11. Computerprogrammprodukt, das bei Ausführung auf einem Prozessor die Schritte nach einem der Ansprüche 1 bis 5 durchführt.

## Revendications

1. Procédé de traitement d'image réalisé par un appareil mobile, le procédé comprenant
la détermination (201) d'une image d'une application cible et d'un environnement réel où l'application cible devrait se trouver en fonction d'un déclenchement d'un événement de prévisualisation ;
l'obtention (202) d'une image d'arrière-plan en fonction de l'environnement réel dans lequel la demande cible devrait se trouver ;
l'exécution (203) d'un traitement d'image sur l'image de l'application cible et/ou l'image d'arrière-plan,
dans lequel l'étape de réalisation d'un traitement d'image comprend la modification d'une valeur d'au moins un facteur d'échelle de gris, de luminance, de chrominance et de transparence de telle sorte que la valeur de l'image de l'application cible en luminance et/ou chrominance soit supérieure à celle de l'image d'arrière-plan et/ou une valeur de l'image de l'application cible en échelle niveau de gris et/ou transparence soit inférieure à celle de l'image d'arrière-plan ; et
si l'image de l'application cible et l'image d'arrière-plan sont traitées dans l'étape de traitement d'image, la délivrance en sortie (204) d'une combinaison des deux images traitées dans un environnement de prévisualisation, ou bien, si une seule de l'image de l'application cible et de l'image d'arrière-plan est traitée à l'étape de traitement d'image, la délivrance en sortie (204) d'une combinaison de l'image traitée et de l'image non traitée dans un environnement de prévisualisation.

2. Procédé selon la revendication 1, dans lequel l'étape de modification de la valeur d'au moins un facteur d'échelle de gris, de luminance, de chrominance et de transparence de l'au moins une image comprend :
la réduction de la transparence de l'image d'arrière-plan de manière à ce que la transparence réduite de l'image d'arrière-plan soit inférieure à la transparence de l'image de l'application cible.

3. Procédé selon la revendication 1 ou 2, dans lequel lors du traitement d'image de l'image d'arrière-plan, l'étape de traitement d'image comprend :
la détermination (303) qu'une valeur d'au moins un facteur de l'échelle de gris et de la transparence de l'image d'arrière-plan est inférieure ou non à une valeur de somme d'une valeur d'un facteur correspondant de l'image de l'application cible et d'une valeur d'amplitude prédéfinie ;
si tel est le cas, l'augmentation (304) de la valeur de l'au moins un facteur de l'échelle de gris et de la transparence de l'image d'arrière-plan à une valeur de somme de la valeur du facteur correspondant de l'image de l'application cible et de la valeur d'amplitude prédéfinie ou au-dessus de la valeur de somme ; ou
la détermination qu'une valeur d'au moins un facteur de la luminance et de la chrominance de l'image d'arrière-plan est supérieure ou non à une valeur de différence entre la valeur du facteur correspondant de l'image de l'application cible et la valeur d'amplitude prédéfinie ;
si tel est le cas, la réduction de la valeur d'au moins un facteur de la luminance et de la chrominance de l'image d'arrière-plan à une valeur de différence entre la valeur du facteur correspondant de l'image de l'application cible et la valeur d'amplitude prédéfinie ou en dessous de la valeur de différence.

4. Procédé selon l'une quelconque des revendications 1 à 3, dans lequel l'image d'arrière-plan est une image de l'environnement réel dans lequel l'application cible n'est pas appliquée ; et
l'étape de délivrance en sortie (204) comprend :
la délivrance en sortie (210) d'une image superposée dans l'environnement de prévisualisation après superposition de l'image de l'application cible sur l'image d'arrière-plan.

5. Procédé selon l'une quelconque des revendications 1 à 3, dans lequel l'image d'arrière-plan est une image obtenue par découpage d'une région où se trouve l'image de l'application cible à partir d'une image de l'environnement réel dans lequel l'application cible est appliquée ; et
l'étape de délivrance en sortie de la combinaison de l'image de l'application cible et de l'image d'arrière-plan dans l'environnement de prévisualisation comprend :
la délivrance en sortie (906) d'une image remplie dans l'environnement de prévisualisation après remplissage de l'image de l'application cible dans une zone de découpage de l'image d'arrière-plan.

6. Dispositif de traitement d'image sur un appareil mobile, comprenant :
un module de simulation environnementale (1101) configuré pour déterminer une image d'une application cible et un environnement réel où l'application cible devrait se trouver en fonction d'un déclenchement d'un événement de prévisualisation ;
un module de génération d'image d'arrière-plan (1102) configuré pour obtenir une image d'arrière-plan en fonction de l'environnement réel dans lequel l'application cible devrait se trouver ;
un module de traitement d'image (1103) configuré pour effectuer un traitement d'image sur l'image de l'application cible et/ou l'image d'arrière-plan,
le module de traitement d'image (1103) étant configuré pour modifier une valeur d'au moins un facteur d'échelle de gris, de luminance, de chrominance et de transparence de l'au moins une image de telle sorte que la valeur de l'image de l'application cible en luminance et/ou chrominance soit supérieure à celle de l'image d'arrière-plan et/ou qu'une valeur de l'image de l'application cible en échelle de gris et/ou transparence soit inférieure à celle de l'arrière-plan ; et
un module de sortie de prévisualisation (1104) configuré pour délivrer en sortie une combinaison des deux images traitées dans un environnement de prévisualisation si l'image de l'application cible et l'image d'arrière-plan sont traitées par le module de traitement d'image (1103) et configuré pour générer une combinaison de l'image traitée et de l'image non traitée dans un environnement de prévisualisation si une seule image de l'application cible et de l'image d'arrière-plan est traitée par le module de traitement d'image (1103).

7. Dispositif selon la revendication 6, dans lequel le module de traitement d'image (1103) réduit la transparence de l'image d'arrière-plan de manière à ce que la transparence réduite de l'image d'arrière-plan soit inférieure à la transparence de l'image de l'application cible.

8. Dispositif selon la revendication 6 ou 7, dans lequel le module de traitement d'image (1103) est configuré en outre pour, lors du traitement d'image de l'image d'arrière-plan, déterminer qu'une valeur d'au moins un facteur de l'échelle de gris et de la transparence de l'image d'arrière-plan est inférieure ou non à une valeur de somme d'une valeur d'un facteur correspondant de l'image de l'application cible et d'une valeur d'amplitude prédéfinie ; si tel est le cas, augmenter la valeur de l'au moins un facteur de l'échelle de gris et de la transparence de l'image d'arrière-plan à une valeur de somme de la valeur du facteur correspondant de l'image de l'application cible et de la valeur d'amplitude prédéfinie ou au-dessus de la valeur de somme ; ou déterminer qu'une valeur d'au moins un facteur de la luminance et de la chrominance de l'image d'arrière-plan est supérieure ou non à une valeur de différence entre la valeur du facteur correspondant de l'image de l'application cible et la valeur d'amplitude prédéfinie ; si tel est le cas, réduire la valeur d'au moins un facteur de la luminance et de la chrominance de l'image d'arrière-plan à une valeur de différence entre la valeur du facteur correspondant de l'image de l'application cible et la valeur d'amplitude prédéfinie ou en dessous de la valeur de différence.

9. Dispositif selon l'une quelconque des revendications 6 à 8, dans lequel l'image d'arrière-plan est une image de l'environnement réel dans lequel l'application cible n'est pas appliquée ; et
le module de sortie de prévisualisation délivre en sortie une image superposée dans l'environnement de prévisualisation après superposition de l'image de l'application cible sur l'image d'arrière-plan.

10. Dispositif selon l'une quelconque des revendications 6 à 8, dans lequel l'image d'arrière-plan est une image obtenue par découpage de la région où se trouve l'image de l'application cible à partir de l'image de l'environnement réel dans lequel l'application cible est appliquée ; et
le module de sortie de prévisualisation (1104) délivre en sortie une image remplie dans l'environnement de prévisualisation après remplissage de l'image de l'application cible dans une zone de découpage de l'image d'arrière-plan.

11. Produit de programme informatique qui, lorsqu'il est exécuté sur un processeur, réalise les étapes selon l'une quelconque des revendications 1 à 5.
